Europäisches Patentamt

European Patent Office

Office européen des brevets

(11) Numéro de publication : **0 327 447 B1**

(12) **FASCICULE DE BREVET EUROPEEN**

(19)

(12)

(45) Date de publication du fascicule du brevet :
**02.11.94 Bulletin 94/44**

(21) Numéro de dépôt : **89400266.6**

(22) Date de dépôt : **31.01.89**

(51) Int. Cl.⁵ : **G01S 5/14**, G01S 13/86,
G01C 21/16

(54) **Système de radionavigation.**

(30) Priorité : **01.02.88 FR 8801111**

(43) Date de publication de la demande :
**09.08.89 Bulletin 89/32**

(45) Mention de la délivrance du brevet :
**02.11.94 Bulletin 94/44**

(84) Etats contractants désignés :
**DE GB NL**

(56) Documents cités :
**EP-A- 0 163 345**
**WO-A-87/07030**
**FR-A- 2 538 560**
**US-A- 3 710 331**
**US-A- 4 672 382**
**US-A- 4 731 613**
**NTC '83 - IEEE 1983 NATIONAL TELESYS-
TEMS CONFERENCE, "Space systems for the
national well-being and security", San Francisco, CA, 14-16 novembre 1983,pages
226-238, IEEE, New York, US; J.L. ARNOLD et
al.: "GPS/INS integration for range instrumentation"**

(73) Titulaire : **THOMSON-CSF
173, Boulevard Haussmann
F-75008 Paris (FR)**

(72) Inventeur : **Dumas, Bernard
THOMSON-CSF
SCPI
B.P.329
50, rue J.-P. Timbaud
F-92402 Courbevoie Cédex (FR)**
Inventeur : **Robin, Léon Pierre
THOMSON-CSF
SCPI
B.P.329
50, rue J.-P. Timbaud
F-92402 Courbevoie Cédex (FR)**

(74) Mandataire : **Benoit, Monique et al
THOMSON-CSF
SCPI
B.P. 329
50, rue Jean-Pierre Timbaud
F-92402 Courbevoie Cédex (FR)**

EP 0 327 447 B1

## Description

La présente invention concerne un système de radionavigation. On connaît à l'heure actuelle deux types de systèmes de radionavigation basés sur des mesures temporelles : les systèmes dits universels (à titre d'exemple le système "Global Positionning System", ou "GPS") et les systèmes dits localisés (à titre d'exemple le système "Trident").

Le système GPS fonctionne avec un récepteur porté par le mobile à localiser (mobile terrestre ou aéronef) et des émetteurs portés par plusieurs satellites. La position du mobile est repérée par recoupement de plusieurs mesures de distance à partir d'un certain nombre de ces satellites (en général 3 ou 4), chaque mesure de distance étant effectuée par mesure du temps séparant l'émission et la réception d'un même signal à partir d'une même référence temporelle (par exemple horloges synchronisées). Chaque satellite fournit dans son message des modèles relatifs à sa trajectoire (éphémérides) et au comportement de son horloge. En réalité la distance brute mesurée, ou pseudo-distance, est entachée d'erreurs diverses telles que celles dues aux fluctuations de propagation ou à la dérive des horloges. On peut cependant réduire très sensiblement la première de ces erreurs, par comparaison par rapport à un récepteur fixe géodesiquement bien défini (mesure différentielle).

Le principal inconvénient du système GPS réside cependant dans le fait que compte tenu de la mobilité de l'élément à localiser, et des temps de propagation, d'acquisition, de calcul ... etc, relativement élevés qui sont mis en jeu dans ce système, celui-ci ne donne pas en temps réel la position réelle du mobile, mais une position prédite à partir de positions déterminées antérieurement, cet inconvénient devenant d'autant plus sensible que le mobile évolue rapidement.

Le système Trident permet par contre, à partir de points géodésiques au sol, équipés de balises répondeuses, de localiser en temps réel et avec une grande précision un mobile équipé d'un interrogateur. La position du mobile est également repérée par recoupement de plusieurs mesures de distance à partir de plusieurs balises, chaque mesure de distance étant effectuée par mesure du temps séparant interrogations et réponses. Une description de la troisième génération du système Trident est donnée par exemple dans la publication spéciale n° 39 "Systèmes de positionnement précis pour les levés hydrographiques - TRIDENT III" publiée par le Bureau Hydrographique International - 150-III-1981. On trouve également une utilisation du système Trident au Bulletin SFPT n° 103-1986 page 11 "Radiolocalisation d'un avion de prise de vues aériennes destinées à des levés hydrographiques côtiers".

En contrepartie, le système Trident présente l'inconvénient de nécessiter un grand nombre de balises au sol (en général de l'ordre de 30), et de ne pas avoir une large couverture du fait de la localisation au sol des balises répondeuses et de l'ordre de grandeur des longueurs d'onde radioélectriques utilisées.

La demande de brevet européen n° EP 0.163.345 décrit un système de guidage terminal ou de recalage de position pour aéronef utilisant des moyens pour déterminer la vitesse de l'aéronef, des moyens pour effectuer des mesures successives de distance de l'aéronef par rapport à des stations au sol, et des moyens pour calculer la position de l'aéronef par résolution d'un système d'équations.

La présente invention a pour objet un système de radionavigation qui permette d'obtenir une bonne précision, en temps réel, tout en nécessitant un matériel réduit, aussi bien au sol qu'à bord du mobile.

La présente invention a pour objet un système de radionavigation tel que défini dans les revendications.

D'autres objets et caractéristiques de la présente invention apparaîtront plus clairement à la lecture de la description suivante d'exemples de réalisation, faite en relation avec les dessins ci-annexés dans lesquels:

- la figure 1 est un diagramme destiné à illustrer le principe de l'invention ;
- la figure 2 est un schéma d'un système de radionavigation suivant un premier exemple de réalisation de l'invention ;
- la figure 3 est un schéma du matériel équipant le mobile à localiser;
- la figure 4 est un schéma d'un système de radionavigation suivant un second exemple de réalisation de l'invention ;
- les figures 5 et 6 sont des exemples de mise en oeuvre du calcul de position du mobile effectué suivant l'invention.

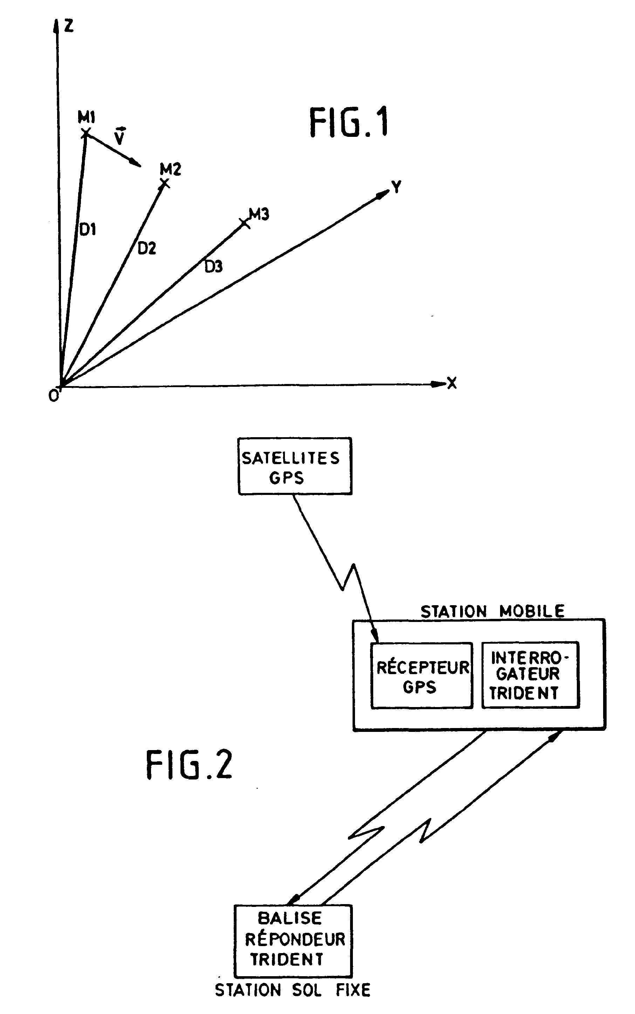

Sur la figure 1, on désigne par $X_i$, $Y_i$, $Z_i$, les coordonnées cartésiennes du mobile M dans le trièdre géodésique OXYZ aux instants $t_i$, et par $D_i$ la distance OM à ces mêmes instants. Dans ce même repère le vecteur vitesse $\vec{V}$ du mobile M a des composants $V_x$, $V_y$, $V_z$. On peut poser $\Delta t = t_{i+1} - t_i$. Comme on va le voir, le problème de la détermination de la position du mobile peut être entièrement résolu à partir d'une valeur de i égale à 3.

On peut en effet écrire les relations circulaires suivantes :

$$X_1^2 + Y_1^2 + Z_1^2 = D_1^2 \quad (1)$$
$$X_2^2 + Y_2^2 + Z_2^2 = D_2^2 \quad (2)$$

$$X_3{}^2 + Y_3{}^2 + Z_3{}^2 = D_3{}^2 \quad (3)$$

En supposant que durant l'intervalle de temps allant de $t_1$ à $t_3$ le vecteur vitesse est resté invariant, les relations (2) et (3) s'écrivent :

$$(X_1 + V_x \Delta t)^2 + (Y_1 + V_y \Delta t)^2 + (Z_1 + V_z \Delta t)^2 = D_2{}^2 \quad (3)$$
$$(X_1 + 2V_x \Delta t)^2 + (Y_1 + 2V_y \Delta t)^2 + (Z_1 + 2V_z \Delta t)^2 = D_3{}^2 \quad (4)$$

$D_1$, $D_2$, $D_3$ et V $(V_x, V_y, V_z)$ étant mesurés, les relations (1) (3) et (4) déterminent sans ambiguité les coordonnées $X_1$, $Y_1$, $Z_1$ du mobile au temps $t_1$, d'où $X_2$, $Y_2$, $Z_2$ et $X_3$, $Y_3$, $Z_3$ aux instants $t_2$ et $t_3$.

Pour la détermination de l'ensemble de la trajectoire on peut procéder par itération et effectuer les mêmes mesures et le même calcul aux instants $t_2$, $t_3$, $t_4$ ... etc. Après deux intervalles de temps $\Delta t$ ou aura ainsi en léger différé trois mesures de la position du mobile aux mêmes instants échantillonnés. Ceci permet par des considérations statistiques d'affiner la mesure.

Les composantes du vecteur vitesse $\vec{V}$ peuvent par exemple être fournies par une centrale gyroscopique ou gyrométrique (classique ou à laser) équipant le mobile. Elles peuvent aussi être obtenues en utilisant un système de radionavigation universel tel que le système GPS, auquel cas un récepteur GPS est prévu à bord du mobile. Les mesures de distance peuvent être effectuées au moyen d'un ensemble interrogateur-répondeur Trident.

Ces deux dernières possibilités correspondent au schéma de la figure 2. Dans ce cas l'équipement de base de navigation du mobile comporte donc un récepteur GPS et un ensemble émission-réception Trident (intérrogateur). Par rapport au cas où le système Trident serait utilisé isolément la station au sol peut ne comporter qu'une balise répondeur.

Le récepteur GPS de bord fournit le vecteur vitesse filtré à partir de positions successives du mobile, suivant des techniques connues, la mesure de chacune de ces positions successives nécessitant elle-même trois mesures de distance successives à partir de trois satellites géodésiquement définis. L'ensemble interrogateur-balise Trident fournit la distance entre la station au sol et le mobile.

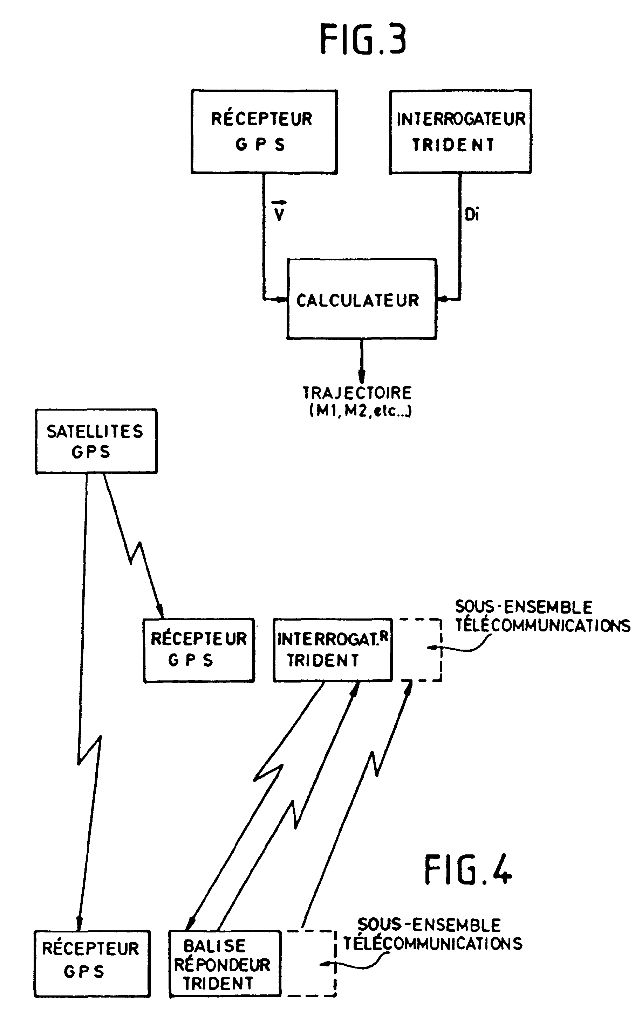

Le calcul de la position du mobile après n mesures successives ($n \geq 3$) tel que décrit précédemment, est effectué par un calculateur de bord visible sur la figure 3 qui représente les équipements situés à bord du mobile.

Le suivi de trajectoire est effectué à la cadence de renouvellement de l'information de distance, c'est-à-dire ici à la cadence de fonctionnement du système Trident.

La cadence de renouvellement de l'information de vitesse est la cadence de fonctionnement du système GPS. L'élaboration de cette grandeur s'effectue à partir d'un nombre de points antérieurs qui peut être un compromis entre la valeur du bruit de mesure et la rapidité de variation du vecteur vitesse.

Sur la figure 4 on a représenté une variante de réalisation correspondant au fonctionnement du système GPS en mode différentiel. Comme rappelé dans l'introduction, ce procédé augmente la précision de positionnement du mobile tout en éliminant la nécessité de synchroniser les horloges satellite-récepteur. Le système décrit précédemment est alors complété de la façon suivante : la station au sol comporte, en plus de la balise répondeur Trident, un récepteur GPS ; par ailleurs un système de télécommunications (avec émetteur au sol et récepteur à bord du mobile) permettant la transmission des informations différentielles est adjoint à l'ensemble interrogateur-répondeur Trident, l'émetteur de ce système de télécommunications pouvant se réduire à un mode de fonctionnement particulier de la balise, et le récepteur pouvant se réduire à un canal de réception de données intégré à l'interrogateur-récepteur Trident.

Le système GPS pourrait être remplacé par tout autre système de radionavigation universel tel que : LORAN, OMEGA, DECCA, aboutissant à une vitesse filtrée assez précise tout en donnant une précision en distance pouvant être très inférieure à celle donnée par les systèmes localisés.

Le système Trident pourrait être remplacé par tout autre système mesurant la distance avec une bonne précision et pouvant être dérivé d'équipements type radar primaire et secondaire, ou lidar. On citera à titre d'exemple les systèmes DME, Télémétre Laser 1,06 $\mu$, Télémètre laser 10,6 $\mu$.

La restriction du procédé décrit à un mouvement rectiligne et uniforme pendant deux intervalles d'échantillonnage peut par ailleurs être levée si l'on considère comme connus les éléments cinématiques d'ordre supérieur à 1 de la trajectoire. D'une manière générale si la trajectoire est curviligne et déterminée localement à l'aide d'éléments cinématiques (dérivées vectorielles) jusqu'au $n^{\text{ième}}$ ordre on peut écrire :

$$\vec{M}(t+\Delta t) - \vec{M}(t) = \frac{d\vec{M}}{dt} \Delta t + \frac{1}{2} \frac{d^2\vec{M}}{dt^2} \Delta t^2 + \frac{1}{6} \frac{d^3\vec{M}}{dt^3} \Delta t^3 + ... \frac{1}{n} \frac{d^n\vec{M}}{dt^n} \Delta t^n$$

(développement limité aux n premiers termes ; l'erreur est inférieure à toute valeur arbitraire pourvu que $|\frac{d^n M}{dt^n}|$ reste inférieur à une certaine valeur et que $\frac{\Delta t}{n}$ soit suffisamment petit) :

$$\vec{M}(t + \Delta t) - \vec{M}(t) = \vec{V}\,\Delta t + \frac{\vec{\gamma}}{2}\,\Delta t^2 + \dots \qquad (5)$$

Si l'on dispose à l'instant t des éléments filtrés de la trajectoire : vitesse $\vec{V}$ , accélération $\vec{\gamma}$ et éventuellement dérivées vectorielles d'ordre supérieur on peut alors écrire d'une manière similaire, en projetant (5) par exemple sur l'axe des X :

$$X_2 = X_1 + V_x\,\Delta t + \frac{\gamma_x}{2}\,\Delta t^2 + \left(\frac{d^3\vec{M}}{dt^3}\right)_X \frac{\Delta t^3}{3!} + \dots \qquad (6)$$

et

$$\left(X_1 + V_x\Delta t + \frac{\gamma_x}{2}\Delta t^2 + \dots\right) + \left(Y_1 + V_y\Delta t + \frac{\gamma_y}{2}\Delta t^2 + \dots\right) + \left(Z_1 + V_z\Delta t + \frac{\gamma_z}{2}\Delta t^2 + \dots\right) = D_2^2 \quad (7)$$

$$\left[X_1 + 2V_x\Delta t + \frac{\gamma_x}{2}(2\Delta t)^2 + \dots\right]^2 + \left[Y_1 + 2V_y\Delta t + \frac{\gamma_y}{2}(2\Delta t)^2 + \dots\right]^2 + \left(Z_1 + 2V_z\Delta t + \frac{\gamma_z}{2}(2\Delta t)^2 + \dots\right) = D_3^2 \quad (8)$$

et toujours

$$X_1^2 + Y_1^2 + Z_1^2 = D_1^2 \quad (1)$$

Les relations (7) (8) et (1) permettent, connaissant

$$\vec{V},\ \vec{\gamma},\ \dots\ \frac{d^n\vec{M}}{dt^n}$$

et $\Delta t$ de déterminer $X_1, Y_1, Z_1$ au temps $t_1$ ainsi que $X_2, Y_2, Z_2$ et $X_3, Y_3, Z_3$ aux instants $t_2 = t_1 + \Delta t$ et $t_3 = t_1 + 2\Delta t$.

A titre d'exemple, dans le cas d'une trajectoire rectiligne avec mouvement uniformément accéléré, on aurait $\frac{d^n M}{dt^n} = 0$ à partir de $n = 3$, et $\vec{\gamma}$ indépendant de t.

Dans le cas d'une trajectoire circulaire avec facteur de charge $|\gamma| = kg$, on aurait :

$$\frac{d^2\vec{M}}{dt^2} = -\vec{OM}\,w^2 = \vec{\gamma}$$

$$\frac{d^3\vec{M}}{dt^3} = -\frac{d\vec{M}}{dt}\,w^2 = -\vec{V}\,w^2$$

$$\frac{d^4\vec{M}}{dt^4} = -\frac{d\vec{M}}{dt}\,w^2 = -\frac{d^2M}{dt^2}\,w^2 = -\vec{\gamma}\,w^2$$

$$\frac{d^5\vec{M}}{dt^5} = -\frac{d^3\vec{M}}{dt^3}\,w^2 = \vec{V}\,w^4$$

$$\frac{d^6\vec{M}}{dt^6} = - \frac{d^4\vec{M}}{dt^4}w^2 = \vec{\gamma}\,w^4$$

Toutes les dérivées vectorielles sont exprimables en fonction de $\vec{v}$, $\vec{\gamma}$ et w (vitesse angulaire). Comme $w = \frac{|\gamma|}{|V|}$, tous les éléments de la trajectoire peuvent s'exprimer en fonction des deux paramètres V (vitesse curviligne) et $\gamma$ (facteur de charge). Ces deux seuls éléments peuvent d'ailleurs être retenus pour une approximation au deuxième ordre de la trajectoire.

Les relations (1) (7) et (8) ci-dessus peuvent s'écrire sous la forme :

$$\begin{cases} X_1^2 + Y_1^2 + Z_1^2 = D_1^2 & (1) \\ (X_1 + A)^2 + (Y_1 + B)^2 + (Z_1 + C)^2 = D_2^2 & (10) \\ (X_1 + A')^2 + (Y_1 + B')^2 + (Z_1 + C')^2 = D_3^2 & (11) \end{cases}$$

avec

$$\begin{cases} X_2 = X_1 + A \; ; \; Y_2 = Y_1 + B \; ; \; Z_2 = Z_1 + C & (12) \\ X_3 = X_1 + A' \; ; \; Y_3 = Y_1 + B' \; ; \; Z_3 = Z_1 + C' & (13) \end{cases}$$

et

$$\begin{cases} A = V_x \Delta t + \frac{\gamma_x}{2}\Delta t^2 + \frac{1}{3!}\,\Delta t^3 (\frac{d^3\vec{M}}{dt^3})_X + ... & (14) \\ B = V_y \Delta t + \frac{\gamma_y}{2}\Delta t^2 + ... & (15) \\ C = V_z \Delta t \frac{\gamma_z}{2}\Delta t^2 + ... & (16) \end{cases}$$

$$\begin{cases} A' = 2V_x \Delta t + \frac{\gamma_x}{2}(2\Delta t)^2 + \frac{1}{3!}(2\Delta t)^3 (\frac{d^3\vec{M}}{dt^3})_X + ... & (17) \\ B' = 2V_y \Delta t + \frac{\gamma_y}{2}(2\Delta t)^2 + ... & (18) \\ C' = 2V_z \Delta t + \frac{\gamma_z}{2}(2\Delta t)^2 + ... & (19) \end{cases}$$

Les relations (10) et (11) peuvent se ramener aux formes linéaires :

$$\begin{cases} AX_1 + BY_1 + CZ_1 = \alpha \\ A'X_1 + B'Y_1 + C'Z_1 = \beta \end{cases}$$

en posant :

$$2\alpha = D_2{}^2 - D_1{}^2 - (A^2 + B^2 + C^2)^2 \quad (20)$$
$$2\beta = D_3{}^2 - D_1{}^2 - (A'^2 + B'^2 + C'^2)^2 \quad (21)$$

D'où

$$X_1 = \frac{\begin{vmatrix} \alpha - CZ_1 & B \\ \beta - C'Z_1 & B' \end{vmatrix}}{\Delta} \quad (22)$$

$$Y_1 = \frac{\begin{vmatrix} A & \alpha - CZ_1 \\ A' & \beta - C'Z_1 \end{vmatrix}}{\Delta} \quad (23)$$

avec $\Delta = AB' - A'B$

On peut développer (22) et (23)

$$\begin{cases} X_1 = \dfrac{Z_1 (BC' - B'C) + \alpha B' - \beta B}{\Delta} \\[2ex] Y_1 = \dfrac{Z_1 (CA' - C'A) + \beta A - \alpha A'}{\Delta} \end{cases}$$

ou

$$\begin{cases} X_1 = r Z_1 + s & (24) \\ Y_1 = r' Z_1 + s' & (25) \end{cases}$$

en posant

$$\begin{cases} r = \dfrac{BC' - B'C}{\Delta} \\[2ex] r' = \dfrac{CA' - C'A}{\Delta} \end{cases} \qquad \begin{cases} s = \dfrac{\alpha B' - \beta B}{\Delta} \\[2ex] s' = \dfrac{\beta A - \alpha A'}{\Delta} \end{cases}$$

La substitution dans (1) aboutit alors à la relation :

$$(rZ_1 + s)^2 + (r'Z_1 + s')^2 = D_1{}^2 - Z_1{}^2$$

ou

$$Z_1{}^2 (r^2 + r'^2 + 1) + 2Z_1 (rs + r's') + s^2 + s'^2 - D_1{}^2 = 0$$

qu'on peut mettre sous la forme :

$$a Z_1{}^2 + 2 b Z_1 + C = 0$$

d'où les solutions

$$Z_1 = \frac{- b \pm \sqrt{\delta}}{a} \quad (27)$$

avec $\delta = b^2 - ac$

en rappelant que :

$$\begin{cases} a = r^2 + r'^2 + 1 \\ b = rs + r's' \\ c = s^2 + s'^2 - D_1^2 \end{cases} \qquad (28)$$

Des relations (24) et (25' on déduit alors $X_1$, $Y_1$.

Des relations (12) et (13) on déduit $X_2$, $Y_2$, $Z_2$, $X_3$, $Y_3$, $Z_3$

La levée d'ambiguité peut s'effectuer par continuité.

La mécanisation du calcul comporte alors les étapes suivantes :

1) Calcul de A, B, C, A', B', C' à partir de $\Delta t$, et à partir de

$$\vec{V}(V_x,\ V_y,\ V_z),\quad (\gamma_x, \gamma_y, \gamma_z),\ \frac{d^3\vec{M}}{dt^3},\ \dots\ \frac{d^n\vec{M}}{dt^n}$$

(relations 14 à 19)

2) Calcul de $\Delta$ et à partir de (26), (28) et de $D_1$, calcul de
   r, r', s, s', a, b, c et $\delta$

3) Calcul de $\alpha$ et $\beta$ par les relations (20) et (21)

4) Calcul de $Z_1$ par (27)

5) Calcul de $X_1$ et $Y_1$ à partir de (22) et (23)

6) Calcul de $X_2$, $Y_2$, $Z_2$, $X_3$, $Y_3$, $Z_3$ par (12) et (13)

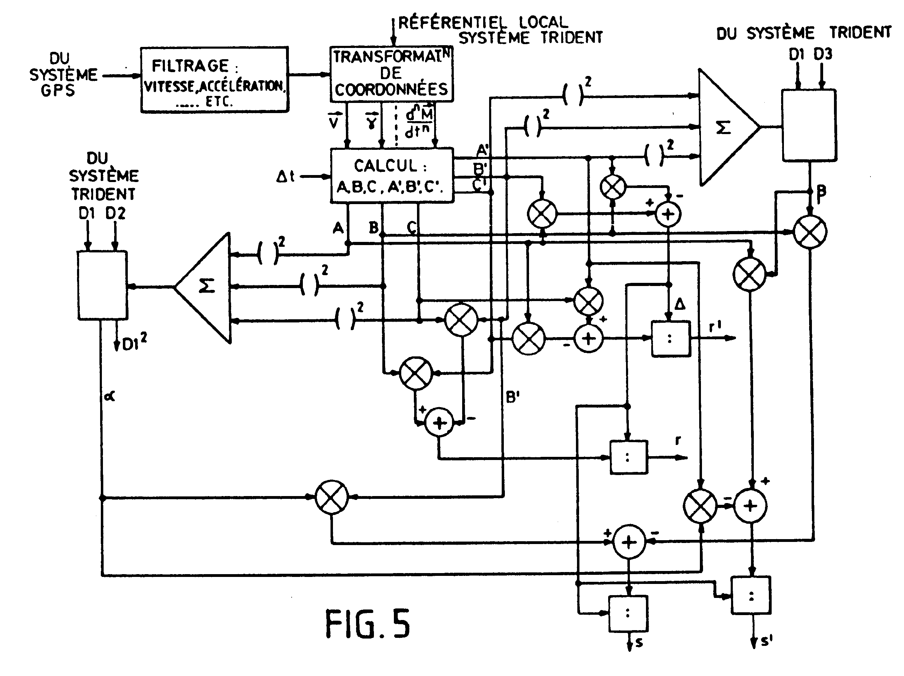

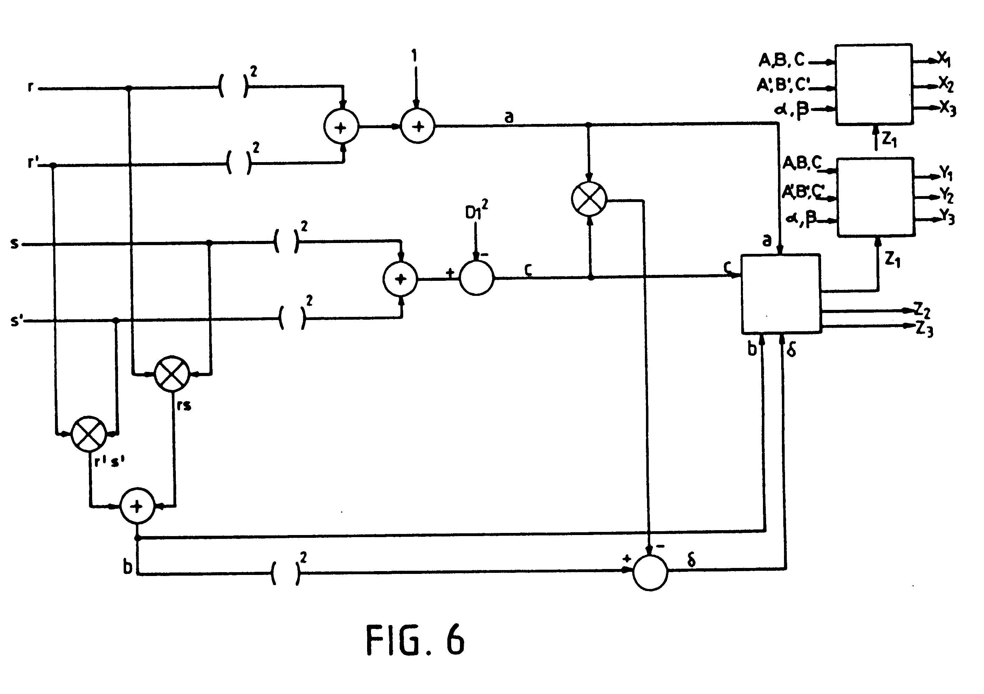

Les figures 5 et 6 sont des exemples de mise en oeuvre des calculs ci-dessus. Sur ces figures on a également représenté un transformateur de coordonnées permettant d'exprimer dans le référentiel géodésique lié au système Trident les coordonnées des vecteurs vitesse, accélération ... etc fournis par le système GPS dans un référentiel lié à celui-ci.

**Revendications**

1. Système de radionavigation du type comportant:
   - des moyens (GPS) pour déterminer en un point ($M_1$) de la trajectoire du mobile à localiser, le vecteur vitesse de ce mobile;
   - des moyens (TRIDENT) pour effectuer des mesures successives de distance ;
   - des moyens (CALCULATEUR) pour calculer la position ($M_3$) de ce mobile par résolution d'un système d'équations;
   
   caractérisé en ce que:
   - les moyens pour déterminer le vecteur vitesse du mobile déterminent éventuellement les dérivées d'ordre "n" de ce vecteur vitesse (avec $n \geqq 1$) ;
   - les moyens pour effectuer des mesures de distance réalisent trois mesures successives de distance respectivement entre un même point géodésique au sol et trois positions successives ($M_1$, $M_2$, $M_3$) occupées par le mobile;
   - les moyens pour calculer la position ($M_3$) du mobile réalisent le calcul des trois relations circulaires relatives aux trois positions, chaque relation reliant la distance d'une position donnée par rapport audit point géodésique aux coordonnées cartésiennes de cette position dans un référentiel donné, ledit calcul étant effectué en remplaçant, dans deux des trois relations, les coordonnées cartésiennes par leur valeur en fonction des coordonnées cartésiennes de la troisième relation, du vecteur vitesse mesuré et éventuellement des dérivées d'ordre "n" de ce vecteur vitesse.

2. Système selon la revendication 1, caractérisé en ce que les moyens pour déterminer le vecteur vitesse et éventuellement les dérivées d'ordre "n" de ce vecteur consistent en une centrale gyroscopique ou gyrométrique équipant le mobile.

3. Système selon la revendication 1, caractérisé en ce que les moyens pour déterminer le vecteur vitesse

7

et éventuellement les dérivées d'ordre "n" de ce vecteur consistent en des moyens pour estimer ces paramètres à partir de mesures antérieures de position du mobile effectuées dans un système de radionavigation du type universel, capable de donner la position du mobile en pratiquement tout point du globe.

4. Système selon la revendication 3, caractérisé en ce que le système de radionavigation du type universel consiste dans le système GPS, le mobile étant équipé d'un récepteur GPS.

5. Système selon l'une des revendications 1 à 4, caractérisé en ce que les moyens pour effectuer des mesures de distance consistent en un ensemble interrogateur-répondeur Trident, l'interrogateur étant placé à bord du mobile et le répondeur au point géodésique considéré au sol.

6. Système selon les revendications 4 et 5, caractérisé en ce que le point géodésique au sol est également équipé d'un récepteur GPS, afin de réaliser un système GPS différentiel, et en ce que des moyens de transmission des informations différentielles ainsi obtenues sont prévus entre le point géodésique au sol et le mobile.

7. Système selon la revendication 6, caractérisé en ce que la réception d'informations différentielles est effectuée au moyen d'un canal de réception de données intégré à l'interrogateur-récepteur Trident.

## Patentansprüche

1. Funknavigationssystem
   - mit Mitteln (GPS), um in einem Punkt ($M_1$) der Bahn des zu ortenden Fahrzeugs den Geschwindigkeitsvektor dieses Fahrzeugs zu bestimmen,
   - mit Mitteln (TRIDENT), um eine Folge von Abstandsmessungen durchzuführen,
   - mit Mitteln (CALCULATEUR) zur Berechnung der Lage ($M_3$) dieses Fahrzeugs, aufgrund der Auflösung eines Gleichungssystems, dadurch gekennzeichnet, daß
   - die Mittel zur Bestimmung des Geschwindigkeitsvektors des Fahrzeugs gegebenenfalls die Ableitungen der Ordnung n dieses Geschwindigkeitsvektors bestimmen ($n \geqq 1$),
   - die Mittel zur Durchführung der Abstandsmessungen drei aufeinanderfolgende Abstandsmessungen zwischen einem gleichen geodätischen Punkt am Boden und drei aufeinanderfolgenden Positionen ($M_1$, $M_2$, $M_3$) des Fahrzeugs durchführen,
   - die Mittel zur Berechnung der Lage ($M_3$) des Fahrzeugs die Berechnung der drei Kreisgleichungen bezüglich der drei Positionen durchführen, wobei jede Gleichung den Abstand einer gegebenen Position bezüglich des geodätischen Punkts mit den kartesischen Koordinaten dieser Position in einem gegebenen Bezugssystem verknüpft und die Berechnung durch Ersatz der kartesischen Koordinaten in zwei dieser drei Gleichungen durch ihren Wert abhängig von den kartesischen Koordinaten der dritten Gleichung, von gemessenen Geschwindigkeitsvektor und gegebenenfalls den Ableitungen der Ordnung n dieses Geschwindigkeitsvektors erfolgt.

2. System nach Anspruch 1, dadurch gekennzeichnet, daß die Mittel zur Bestimmung des Geschwindigkeitsvektors und gegebenenfalls der Ableitungen der Ordnung n dieses Vektors in einen Kreiselkompaß oder einer Kreiselmeßzentrale an Bord des Fahrzeugs bestehen.

3. System nach Anspruch 1, dadurch gekennzeichnet, daß die Mittel zur Bestimmung des Geschwindigkeitsvektors und gegebenenfalls der Ableitungen der Ordnung n dieses Vektors von Mitteln gebildet werden, die diese Parameter, ausgehend von früheren Messungen der Position des Fahrzeugs abschätzen, die in einem universalen Funknavigationssystem durchgeführt werden, welches die Position des Fahrzeugs in praktisch jedem Punkt des Erdballs ermitteln kann.

4. System nach Anspruch 3, dadurch gekennzeichnet, daß das Universalfunknavigationssystem aus dem System GPS besteht, wobei das Fahrzeug einen GPS-Empfänger aufweist.

5. System nach einem der Ansprüche 1 bis 4, dadurch gekennzeichnet, daß die Mittel zur Durchführung der Abstandsmessungen aus einer Einheit vom Tridenttyp mit Abfragesender und Reponder besteht, wobei der Abfragesender an Bord des Fahrzeugs und der Reponder am betrachteten geodätischen Punkt am Boden angeordnet ist.

6. System nach den Ansprüchen 4 und 5, dadurch gekennzeichnet, daß der geodätische Punkt am Boden weiter einen GPS-Empfänger aufweist, um ein Differential-GPS-System zu bilden, und daß Mittel zur Übertragung der so erhaltenen Differentialinformationen zwischen dem geodätischen Punkt am Boden und dem Fahrzeug vorgesehen sind.

7. System nach Anspruch 6, dadurch gekennzeichnet, daß der Empfang von Differentialinformationen mit Hilfe eines Datenempfangskanals erfolgt, der in den Abfragesender-Empfänger vom Tridenttyp integriert ist.

## Claims

1. Radio navigation system of the type including:
   - means (GPS) for determining at a point ($M_1$) of the trajectory of the vehicle to be located, the velocity vector of this vehicle;
   - means (TRIDENT) for performing successive measurements of distance;
   - means (COMPUTER) for computing the position ($M_3$) of this vehicle by solving a system of equations; characterized in that:
   - the means for determining the velocity vector of the vehicle possibly determine the derivatives of order "n" of this velocity vector (with $n \geqq 1$);
   - the means for performing measurements of distance undertake three successive measurements of distance between respectively a same geodesic point on the ground and three successive positions ($M_1$, $M_2$, $M_3$) occupied by the vehicle;
   - the means for computing the position ($M_3$) of the vehicle undertake the computation of the three circular relations relating to the three positions, each relation linking the distance of a given position relative to the said geodesic point to the cartesian coordinates of this position in a given reference frame, the said computation being performed by replacing, in two of the three relations, the cartesian coordinates by their value in terms of the cartesian coordinates of the third relation, of the measured velocity vector and possibly of the derivatives of order "n" of this velocity vector.

2. System according to Claim 1, characterized in that the means for determining the velocity vector and possibly the derivatives of order "n" of this vector consist of a gyroscope or rate gyro set with which the vehicle is equipped.

3. System according to Claim 1, characterized in that the means for determining the velocity vector and possibly the derivatives of order "n" of this vector consist of means for estimating these parameters from earlier measurements of the position of the vehicle performed in a radio navigation system of the universal type, capable of giving the position of the vehicle at practically any point on the globe.

4. System according to Claim 3, characterized in that the radio navigation system of the universal type consists of the GPS system, the vehicle being equipped with a GPS receiver.

5. System according to one of Claims 1 to 4, characterized in that the means for performing measurements of distance consist of a Trident interrogator/responder unit, the interrogator being placed on board the vehicle and the responder at the relevant geodesic point on the ground.

6. System according to Claims 4 and 5, characterized in that the geodesic point on the ground is also equipped with a GPS receiver, so as to produce a differential GPS system, and in that means for relaying the differential information thus obtained are provided between the geodesic point on the ground and the vehicle.

7. System according to Claim 6, characterized in that the reception of differential information is performed by means of a data reception channel built into the Trident interrogator/receiver.

# FIG.1

# FIG.2

# FIG.3

RÉCEPTEUR G P S

INTERROGATEUR TRIDENT

$\vec{V}$

Di

CALCULATEUR

TRAJECTOIRE (M1,M2,etc...)

# FIG.4

SATELLITES GPS

RÉCEPTEUR G P S

INTERROGAT.$^R$ TRIDENT

SOUS·ENSEMBLE TÉLÉCOMMUNICATIONS

RÉCEPTEUR GPS

BALISE RÉPONDEUR TRIDENT

SOUS·ENSEMBLE TÉLÉCOMMUNICATIONS

11

FIG. 5

FIG. 6